# EUROPÄISCHE PATENTANMELDUNG

(11) **EP 1 595 639 A1**
(43) Veröffentlichungstag der Anmeldung: **16.11.2005**
(21) Anmeldenummer: 04011160.1
(22) Anmeldetag: 11.05.2004
(51) Int. Cl.: B23Q 1/70, B23Q 1/54, B23Q 11/00

(54) **Werkzeugmaschine zum Bearbeiten von ringförmigen Werkstücken**

(71) Anmelder: Liechti Engineering AG, 3550 Langnau im Emmental (CH)
(72) Erfinder: Liechti, Ralph, Dipl.-Ing ETH, 3111 Tägertschi (CH); Lehmann, Fritz, 3550 Langnau (CH); Scheidegger, Andreas, Dr.sc.tech.Masch-Ing., 3510 Konofingen (CH)
(74) Vertreter: Secklehner, Günter

(57) **Zusammenfassung**

Die Werkzeugmaschine ist zum Bearbeiten von ringförmigen Werkstücken (1), insbesondere einstückigen Turbinenrädem, so genannten "bladed rings" vorgesehen. Sie weist eine rotierbare Spannvorrichtung (2) für ein Werkstück (1) auf, die von einem Tragteil (4) getragen wird, welcher seinerseits durch einen Stützteil (5) gestützt wird. Um das Längenmass (14), um welches der Tragteil (4) das Werkstück (1) an der dem Stützteil (5) zugewandten Seite überragt, möglichst gering zu halten, ragt der Tragteil (4) so weit in die Spannvorrichtung (2) hinein, dass er mindestens die dem Stützteil (5) zugewandte Grenzfläche (7) des Werkstücks (1) durchragt. Dadurch wird eine Platzeinsparung und somit eine verbesserte Zugänglichkeit der dem Stützteil (5) zugewandten Seite des Werkstücks (1) für das Werkzeug erreicht.

## Beschreibung

Die Erfindung bezieht sich auf eine Werkzeugmaschine zum Bearbeiten von ringförmigen Werkstücken mit mindestens einer um eine erste Rotationsachse rotierbaren Spannvorrichtung für ein Werkstück, mit einer Antriebsvorrichtung zum rotierenden Antreiben der Spannvorrichtung, mit einem koaxial zur ersten Rotationsachse angeordneten Tragteil für die Spannvorrichtung, mit einem den Tragteil aufnehmenden Stützteil und mit mindestens einer um eine zweite Rotationsachse antreibbaren Werkzeugspindel, wobei die Spannvorrichtung und die Werkzeugspindel relativ zueinander bewegbar sind.

Werkzeugmaschinen dieser Art werden unter anderem zum Fräsen von Turbinenrädern aus scheibenförmigen Rohlingen benutzt. Solche Räder sind auch unter der Abkürzung Blisks (bladed disks) bekannt. Es wird dabei nach Möglichkeit angestrebt, das Werkstück in einer einzigen Einspannung fertig zu bearbeiten, da ein Umspannen immer mit zusätzlichem Aufwand und dem Risiko von Ungenauigkeiten verbunden ist. Bei Werkstücken mit Turbinenschaufeln, die radial nach aussen ragende freie Enden haben, ist dies relativ einfach zu bewerkstelligen. Bei Werkstücken, bei denen die Turbinenschaufeln radial aussen durch einen Ring verbunden sind, man spricht in diesem Fall von Blings (bladed rings), ist es schwieriger, das Werkstück in einer einzigen Aufspannung fertig zu bearbeiten, insbesondere dann, wenn die Turbinenschaufeln relativ stark gekrümmt und die Strömungskanäle relativ eng sind. Die Hauptschwierigkeit besteht dabei darin, mit dem Werkzeug an die Seite des Werkstücks heran zu kommen, welche dem Stützteil zugewandt ist, welcher die Spannvorrichtung mit dem Werkstück trägt. Als Stützteil soll in diesem Zusammenhang ein Teil oder eine Baugruppe verstanden werden, der beziehungsweise die sich in einem Winkel zur ersten Rotationsachse erstreckt und einen die Spannvorrichtung aufnehmenden Tragteil abstützt, üblicherweise am Maschinenrahmen. Als Tragteil soll in diesem Zusammenhang eine Welle oder eine Achse verstanden werden, welche die Spannvorrichtung trägt. Je grösser das Längenmass ist, um welches sich der Tragteil und der Stützteil von der dem Stützteil zugewandten Grenzfläche des Werkstückes weg erstreckt, desto begrenzter ist der Bereich, welcher für das Werkzeug zugänglich ist, weil die Werkzeugspindel mit dem Stützteil, dem Tragteil oder einem den Stützteil und den Tragteil umgebenden Gehäuse kollidieren kann. Um das Problem zu lösen, könnte man lange, schlanke Werkzeuge einsetzen, doch wird dadurch die Bearbeitungsleistung negativ beeinträchtigt, weil schlanke Werkzeuge nur relativ kleine Schnittkräfte aufnehmen können.

Ausgehend von diesem Stand der Technik liegt der vorliegenden Erfindung die Aufgabe zugrunde, eine Werkzeugmaschine der eingangs genannten Art vorzuschlagen, bei welcher das Längenmass, um welches der Tragteil das Werkstück an der dem Stützteil zugewandten Seite überragt, möglichst gering ist.

Diese Aufgabe der Erfindung wird erfindungsgemäss dadurch gelöst, dass der Tragteil so weit in die Spannvorrichtung hinein ragt, dass er mindestens die dem Stützteil zugewandte Grenzfläche des Werkstücks durchragt.

Der sich durch die Merkmale des Kennzeichenteiles des Anspruches 1 ergebende Vorteil besteht darin, dass durch die Platzierung eines Teils des Tragteils innerhalb des Werkstücks das Werkstück selbst näher am Stützteil angeordnet werden kann, als bei den Werkzeugmaschinen nach dem Stand der Technik.

Für die rotierbare Lagerung der Spannvorrichtung sind zwei Alternativen denkbar. Nach einer ersten Alternative ist der Tragteil gegenüber dem Stützteil mit Hilfe mindestens eines Rotationslagers rotierbar gelagert. Nach einer zweiten Alternative ist der Tragteil mit dem Stützteil nicht rotierbar verbunden und die Spannvorrichtung ist auf dem Tragteil mit Hilfe mindestens eines Rotationslagers rotierbar gelagert. Beide Alternativen erlauben eine Konstruktion, bei welcher mindestens ein Rotationslager weiter vom Stützteil entfernt ist als die dem Stützteil zugewandte Grenzfläche des Werkstücks. Wenn auf diese Weise mindestens ein Rotationslager innerhalb des Werkstücks oder sogar ausserhalb der dem Stützteil abgewandten Grenzfläche des Werkstücks angeordnet ist, wird neben der verbesserten Zugänglichkeit des Werkstücks auch noch die Stabilität verbessert, indem durch die Schnittkräfte auf den Tragteil und den Stützteil übertragene Biegemomente reduziert werden.

Nach einer weiteren Ausführungsart der Erfindung ist die Antriebsvorrichtung zum rotierenden Antreiben der Spannvorrichtung als Torquemotor ausgebildet, der den Tragteil umgibt. Dies erlaubt es, die Baugruppe, welche den Tragteil umfasst, kompakt zu bauen.

Wenn nach einer weiteren Ausführungsart der erfindungsgemässen Werkzeugmaschine die Spannvorrichtung um eine zur ersten und zweiten Translationsachse rechtwinklig angeordnete zweite Rotationsachse schwenkbar ist, können beide Grenzflächen des Werkstücks durch eine einzige Werkzeugspindel bearbeitet werden.

Die Erfindung wird im nachfolgenden anhand der in den Zeichnungen dargestellten Ausführungsbeispiele näher erläutert.

Es zeigen:
- Fig. 1: anhand einer perspektivischen Ansicht einer Werkzeugmaschine nach dem Stand der Technik die Anordnung der Rotations- und Translationsachsen;
- Fig. 2: einen schematischen Längsschnitt durch die erste Rotationsachse einer Werkzeugmaschine nach dem Stand der Technik, wobei die Spannvorrichtung über ein Zahnradgetriebe angetrieben wird;
- Fig. 3: einen Längsschnitt entsprechend Figur 2, jedoch mit einem Torquemotor als Antriebsvorrichtung für die Spannvorrichtung;
- Fig. 4: einen schematischen Längsschnitt durch die erste Rotationsachse eines ersten Ausführungsbeispiels der erfindungsgemässen Werkzeugmaschine;
- Fig. 5: einen Längsschnitt entsprechend Figur 4 eines zweiten Ausführungsbeispiels der erfmdungsgemässen Werkzeugmaschine;
- Fig. 6: einen Längsschnitt entsprechend Figur 4 eines dritten Ausführungsbeispiels der erfindungsgemässen Werkzeugmaschine;
- Fig. 7: einen Längsschnitt entsprechend Figur 4 eines vierten Ausführungsbeispiels der erfindungsgemässen Werkzeugmaschine;
- Fig. 8: einen Längsschnitt entsprechend Figur 4 eines fünften Ausführungsbeispiels der erfindungsgemässen Werkzeugmaschine;
- Fig. 9: einen Längsschnitt entsprechend Figur 4 eines sechsten Ausführungsbeispiels der erfindungsgemässen Werkzeugmaschine;
- Fig. 10: eine perspektivische Ansicht eines Ausführungsbeispiels der erfindungsgemässen Werkzeugmaschine zur Veranschaulichung einer möglichen relativen Lage des Werkzeugs in Bezug auf das Werkstück.

Einführend sei festgehalten, dass in den unterschiedlich beschriebenen Ausführungsformen gleiche Teile mit gleichen Bezugszeichen beziehungsweise gleichen Bauteilbezeichnungen versehen sind, wobei die in der gesamten Beschreibung enthaltenen Offenbarungen sinngemäss auf gleiche Teile mit gleichen Bezugszeichen beziehungsweise gleichen Bauteilbezeichnungen übertragen werden können. Auch sind die in der Beschreibung gewählten Lageangaben, wie zum Beispiel oben, unten, seitlich und so weiter auf die unmittelbar beschriebene sowie dargestellte Figur bezogen und sind bei einer Lageänderung sinngemäss auf die neue Lage zu übertragen.

Die Ausführungsbeispiele zeigen mögliche Ausführungsvarianten der Werkzeugmaschine, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch die gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Der Ordnung halber sei abschliessend darauf hingewiesen, dass zum besseren Verständnis des Aufbaus der Werkzeugmaschine diese beziehungsweise deren Bestandteile teilweise unmassstäblich und/oder vergrössert und/oder verkleinert dargestellt wurden.

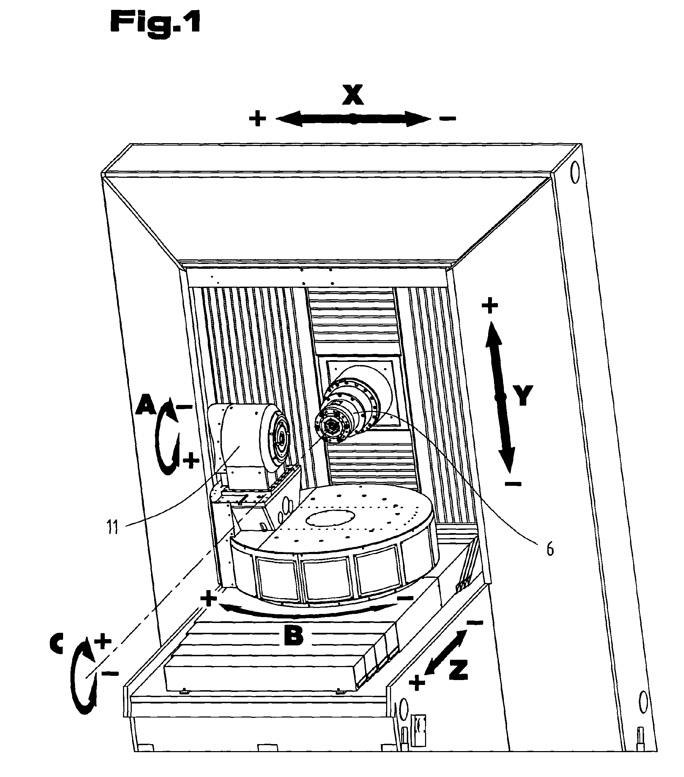

Figur 1 zeigt in einer perspektivischen Ansicht einen Teil einer Werkzeugmaschine nach dem Stand der Technik. Die Figur dient insbesondere dazu, die Anordnung der in der Beschreibung und den Patentansprüchen erwähnten Achsen zu veranschaulichen. Ein nicht dargestelltes Werkstück wird auf der Werkzeugmaschine um eine erste Rotationsachse A rotierbar eingespannt. In einem Winkel zur ersten Rotationsachse A ist eine Werkzeugspindel 6 angeordnet, die ein nicht dargestelltes Werkzeug, beispielsweise einen Fräser aufnimmt, welches eine zweite Rotationsachse C rotierend angetrieben wird. Das Werkstück kann zudem um eine zur ersten Rotationsachse rechtwinklig angeordnete dritte Rotationsachse B schwenkbar sein, was aber nicht zwingend ist. Damit das Werkstück durch das Werkzeug bearbeitet werden kann, müssen diese beiden Teile relativ zueinander bewegbar sein. Die entsprechenden Relativbewegungen erfolgen entlang einer ersten Translationsachse X, einer zweiten Translationsachse Z und einer dritten Translationsachse Y. Dabei ist es prinzipiell unerheblich, ob jeweils das Werkstück oder das Werkzeug entlang einer dieser Translationsachsen bewegt wird. Ein Gehäuse 11 nimmt den Stützteil, den Tragteil und die zur rotierenden Lagerung der Spannvorrichtung benötigten Lager auf. Bei vielen bekannten Werkzeugmaschinen ist in diesem Gehäuse auch die Antriebsvorrichtung zum rotierenden Antreiben der Spannvorrichtung untergebracht. Beim hier gezeigten Beispiel ist der gesamte Maschinenrahmen zwecks Abtransports der Späne und des Kühlmittels durch Schwerkraft um die X-Achse geneigt.

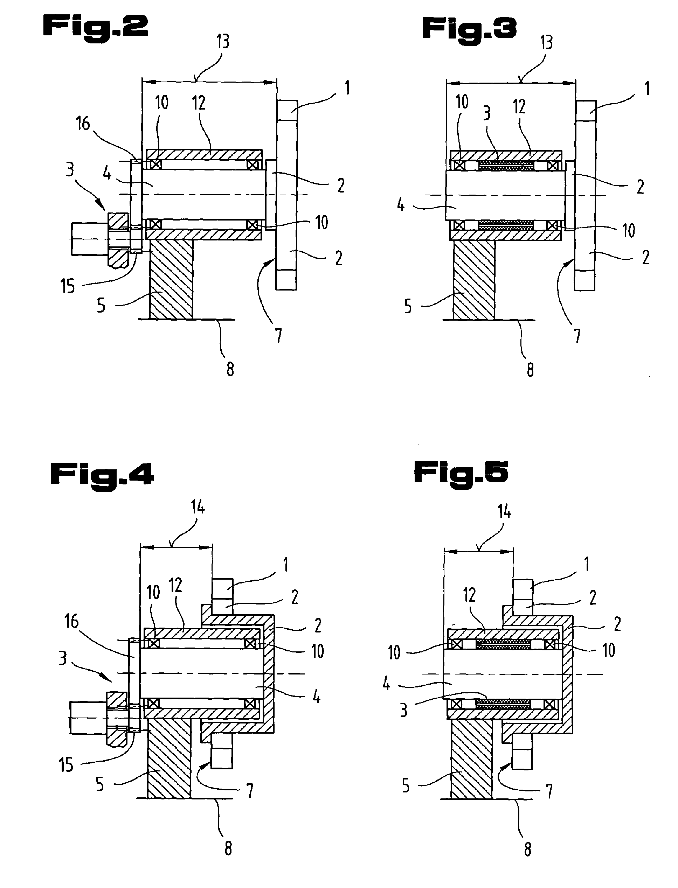

Figur 2 zeigt einen Längsschnitt durch die erste Rotationsachse A einer Werkzeugmaschine nach dem Stand der Technik. Ein Werkstück 1, das in diesem Fall die Form einer runden Scheibe hat, wird durch eine Spannvorrichtung 2 festgehalten, die in der Figur nur schematisch gezeichnet ist. Die Spannvorrichtung wird ihrerseits durch einen Tragteil 4 getragen, welcher hier als Welle ausgebildet ist, welche ein Drehmoment von einer Antriebsvorrichtung 3 auf die Spannvorrichtung 2 überträgt. Die Antriebsvorrichtung 3 umfasst bei diesem Beispiel ein Zahnrad 16 und ein Ritzel 15, das durch einen nicht dargestellten Motor angetrieben wird. Die Welle 4 ist mittels zweier Rotationslager 10 in einer Lagerhülse 12 gehalten und diese ist mit Hilfe eines Stützteils 5 auf einer Unterlage, beispielsweise einem Tisch 8 abgestützt.

Figur 3 betrifft ebenfalls eine Werkzeugmaschine nach dem Stand der Technik und zeigt in einer ähnlichen Darstellung wie Figur 2 eine andere Ausführungsart. Bei dieser Ausführungsart ist die Abtriebsvorrichtung 3 als Torquemotor ausgebildet, dessen Stator mit der Lagerhülse 12 und dessen Rotor mit der Welle 4 verbunden ist.

Die beiden vorangehend beschriebenen Beispiele zeigen, dass bei Werkzeugmaschinen nach dem Stand der Technik die für die rotierbare Einspannung des Werkstücks 1 nötigen Teile relativ viel Platz beanspruchen. Dies wird durch die in Figur 2 und 3 eingezeichnete Distanz 13 verdeutlicht. Als Folge dieses Platzbedarfs ist die Zugänglichkeit für das Werkzeug zu der dem Stützteil 5 zugewandten Grenzfläche 7 des Werkstücks 1 erschwert und es müssen daher lange Werkzeuge verwendet werden, was die Bearbeitungsleistung negativ beeinträchtigt.

Figur 4 zeigt in einer ähnlichen Darstellung wie die Figuren 2 und 3 ein erstes Ausführungsbeispiel einer erfindungsgemässen Werkzeugmaschine. Ein Werkstück 1 ist mit Hilfe einer Spannvorrichtung 2 gespannt. Letztere ist nur schematisch dargestellt, da sie nicht Gegenstand der vorliegenden Erfindung ist. Es wurde daher insbesondere darauf verzichtet, die Teile der Spannvorrichtung 2, welche im Kontakt mit dem Werkstück stehen, detailliert darzustellen. Die Spannvorrichtung 2 mit dem eingespannten Werkstück1 wird von einem Tragteil 4 getragen, der bei diesem Beispiel als Welle ausgebildet ist, welche ein Drehmoment von einer Antriebsvorrichtung 3 auf die Spannvorrichtung 2 überträgt. Die Antriebsvorrichtung 3 umfasst ein Zahnrad 16 und ein Ritzel 15, das durch einen nicht dargestellten Motor angetrieben wird. Die Welle 4 ist mittels zweier Rotationslager 10 in einer Lagerhülse 12 gehalten und diese ist mit Hilfe eines Stützteils 5 auf einer Unterlage, beispielsweise einem Tisch 8 abgestützt. Anders als beim aus dem Stand der Technik bekannten Beispiel gemäss Figur 2 ragt im Beispiel nach Figur 4 der Tragteil 4 in die Spannvorrichtung hinein und durchdringt die dem Stützteil zugewandte Grenzfläche 7 des Werkstücks beziehungsweise eine entsprechende Fläche an der Spannvorrichtung 2, an welcher diese Grenzfläche 7 anliegt. Dadurch wird es möglich, dass das Werkstück 1 zwischen den beiden Rotationslagern 10 liegt. Daraus resultiert gegenüber dem aus dem Stand der Technik bekannten Beispiel gemäss Figur 2 ein erheblicher Platzgewinn, durch welchen die Zugänglichkeit der dem Stützteil 5 zugewandten Grenzfläche 7 des Werkstücks 1 für das Werkzeug wesentlich verbessert wird. Ein Vergleich der in Figur 4 eingezeichneten Distanz 14 mit der Distanz 13 von Figur 2 macht diesen Platzgewinn deutlich.

Figur 5 zeigt ein zweites Ausführungsbeispiel einer erfindungsgemässen Werkzeugmaschine. Auch in diesem Beispiel ist der Tragteil 4 als Welle ausgebildet, die ein Drehmoment auf die Spannvorrichtung 2 überträgt. Wie bei dem aus dem Stand der Technik bekannten Beispiel gemäss Figur 3 ist bei der Ausführungsart nach Figur 5 die Abtriebsvorrichtung 3 als Torquemotor ausgebildet, dessen Stator mit der Lagerhülse 12 und dessen Rotor mit der Welle 4 verbunden ist. Ein Vergleich der in Figur 5 eingezeichneten Distanz 14 mit der Distanz 13 von Figur 3 zeigt wiederum den durch die Erfindung erreichten Platzgewinn.

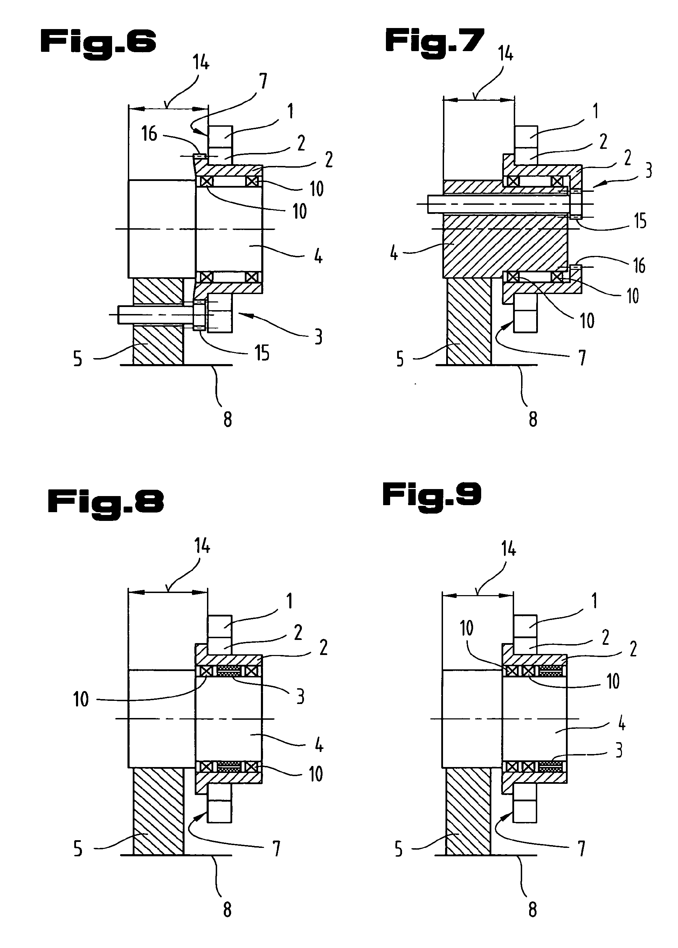

In den Figuren 6 bis 9 sind weitere vier Ausführungsbeispiele der erfindungsgemässen Werkzeugmaschine dargestellt. Bei diesen Beispielen ist der Tragteil 4, im Unterschied zu den Beispielen nach den Figuren 4 und 5, nicht als Welle ausgebildet, sondern als nicht drehende Achse. Somit kann bei diesen Ausführungsbeispielen auf die Lagerhülse 12 verzichtet werden. In jedem der Beispiele nach den Figuren 6 bis 9 sind jeweils zwei Rotationslager 10 vorgesehen, die mit ihrem Innenring auf der genannten Achse 4 sitzen und mit ihrem Aussenring die Spannvorrichtung 2 drehbar abstützen. Die Figuren 6 und 7 zeigen Ausführungsbeispiele, bei denen die Antriebsvorrichtung 3 ein Zahnradgetriebe umfasst. Beim Ausführungsbeispiel nach Figur 6 kämmt ein im Stützteil 5 gelagertes Ritzel 15 mit einem Zahnkranz 16, der direkt am Aussenumfang der Spannvorrichtung 2 angeordnet sein kann. Beim Ausführungsbeispiel nach Figur 7 ist ein Ritzel 15 in der Achse 4 gelagert und an der Spannvorrichtung 2 ist ein Innenzahnkranz 16 vorgesehen. Die Figuren 8 und 9 zeigen Ausführungsbeispiele, bei denen die Antriebsvorrichtung 3 durch einen Torquemotor gebildet ist. In beiden Ausführungsbeispielen ist der Stator des Torquemotors 3 auf der Achse 4 angeordnet und der Rotor ist mit der Spannvorrichtung 2 verbunden. Die Ausführungsarten nach den Figuren 8 und 9 unterscheiden sich nur durch die Anordnung der Rotationslager 10. Während beim Beispiel nach Figur 8 auf beiden Längsseiten des Torquemotors 3 je ein Rotationslager 10 angeordnet ist, sind beim Beispiel gemäss Figur 9 zwei Rotationslager 10 nebeneinander auf der gleichen Seite des Torquemotors angeordnet.

Allen dargestellten und beschriebenen Ausführungsbeispielen ist gemeinsam, dass erfindungsgemäss der Tragteil 4 so weit in die Spannvorrichtung 2 hinein ragt, dass er mindestens die dem Stützteil 5 zugewandte Grenzfläche 7 des Werkstücks 1 durchragt.

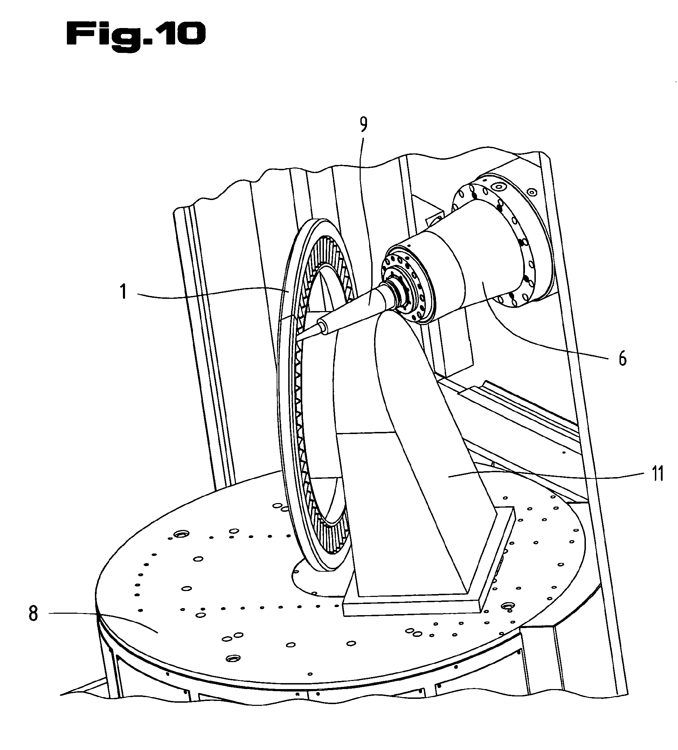

Figur 10 ist eine perspektivische Ansicht eines Ausschnitts einer erfindungsgemässen Werkzeugmaschine. Die Figur veranschaulicht anhand der dargestellten relativen Lage der Werkzeugspindel 6 mit dem Werkzeug 9 in Bezug auf das Werkstück 1 den durch die Erfindung erreichten Platzgewinn auf der dem Stützteil zugewandten Seite des Werkstücks 1. Der Stützteil ist in diesem Beispiel auf einem Drehtisch 8 montiert und mit einem Gehäuse 11 abgedeckt. Die Spannvorrichtung ist in diesem Beispiel nicht dargestellt.

### Bezugszeichenaufstellung

- A: erste Rotationsachse
- B: dritte Rotationsachse
- C: zweite Rotationsachse
- X: erste Translationsachse
- Y: dritte Translationsachse
- Z: zweite Translationsachse

- 1: Werkstück
- 2: Spannvorrichtung
- 3: Antriebsvorrichtung
- 4: Tragteil (Welle bzw. Achse)
- 5: Stützteil

- 6: Werkzeugspindel
- 7: Grenzfläche
- 8: Tisch
- 9: Werkzeug (Fräser)
- 10: Rotationslager

- 11: Gehäuse
- 12: Lagerhülse
- 13: Distanz (Stand der Technik)
- 14: Distanz (Erfindung)
- 15: Ritzel

- 16: Zahnrad

## Patentansprüche

1. Werkzeugmaschine zum Bearbeiten von ringförmigen Werkstücken (1) mit mindestens einer um eine erste Rotationsachse (A) rotierbaren Spannvorrichtung (2) für ein Werkstück (1), mit einer Antriebsvorrichtung (3) zum rotierenden Antreiben der Spannvorrichtung (2), mit einem koaxial zur ersten Rotationsachse (A) angeordneten Tragteil (4) für die Spannvorrichtung (2), mit einem den Tragteil (4) aufnehmenden Stützteil (5) und mit mindestens einer um eine zweite Rotationsachse (C) antreibbaren Werkzeugspindel (6), wobei die Spannvorrichtung (2) und die Werkzeugspindel relativ zueinander bewegbar sind, **dadurch gekennzeichnet, dass** der Tragteil (4) so weit in die Spannvorrichtung (2) hinein ragt, dass er mindestens die dem Stützteil (5) zugewandte Grenzfläche (7) des Werkstücks (1) durchragt.

2. Werkzeugmaschine nach Anspruch 1, **dadurch gekennzeichnet, dass** der Tragteil (4) gegenüber dem Stützteil (5) mit Hilfe mindestens eines Rotationslagers (10) rotierbar gelagert ist.

3. Werkzeugmaschine nach Anspruch 1, **dadurch gekennzeichnet, dass** der Tragteil (4) mit dem Stützteil (5) nicht rotierbar verbunden ist und dass die Spannvorrichtung (2) auf dem Tragteil (4) mit Hilfe mindestens eines Rotationslagers (10) rotierbar gelagert ist.

4. Werkzeugmaschine nach einem der Ansprüche 2 bis 3, **dadurch gekennzeichnet, dass** mindestens ein Rotationslager (10) weiter vom Stützteil (5) entfernt ist als die dem Stützteil (5) zugewandte Grenzfläche (7) des Werkstücks (1).

5. Werkzeugmaschine nach einem der vorangehenden Ansprüche, **dadurch gekennzeichnet, dass** die Antriebsvorrichtung (3) zum rotierenden Antreiben der Spannvorrichtung (2) als Torquemotor ausgebildet ist, der den Tragteil (4) umgibt.

6. Werkzeugmaschine nach einem der vorangehenden Ansprüche, **dadurch gekennzeichnet, dass** die Spannvorrichtung (2) um eine zur ersten und zweiten Translationsachse (Z) rechtwinklig angeordnete dritte Rotationsachse (B) schwenkbar ist.
